# EUROPÄISCHE PATENTANMELDUNG

(11) **EP 0 642 967 A2**
(43) Veröffentlichungstag der Anmeldung: **15.03.1995**
(21) Anmeldenummer: 94113013.0
(22) Anmeldetag: 20.08.1994
(51) Int. Cl.: B61L 27/00

(54) **Verkehrsnetz mit ringförmiger Trasse**

(30) Priorität: 10.09.1993 DE 4330803
(71) Anmelder: Alcatel SEL Aktiengesellschaft, D-70435 Stuttgart (DE)
(72) Erfinder: Klumpp, Dieter, D-70193 Stuttgart (DE)
(74) Vertreter: Pechhold, Eberhard, Dipl.-Phys.

(57) **Zusammenfassung**

Es wird ein Verkehrsnetz mit ringförmiger Trasse und auf dieser Trasse automatisch bewegten Objekten angegeben. Das Verkehrsnetz ist für den Transport einheitlicher Frachtgutbehälter mit gleichbleibender Geschwindigkeit ausgelegt. Es weist Be- und Entladestellen auf, an denen Frachtgutbehälter in den fließenden Verkehrsstrom eingefügt oder ausgegliedert werden können, ohne daß andere Frachtgutbehälter hierzu abgebremst oder angehalten werden müssen. Die Trassen verlaufen vorzugsweise aufgeständert über vorhandenen Bahnstrecken oder Autobahnen oder auch in unterirdischen Röhren und umschließen Ballungsgebiete oder ganze Länder oder Landesteile. In größeren Trassenringen können durch Querverbindungen Unterringe geschaffen werden, die die Transportwege abkürzen.

## Beschreibung

Die Erfindung betrifft ein Verkehrsnetz mit ringförmiger Trasse und auf dieser automatisch bewegten Objekten.

Ein derartiges Verkehrsnetz ist z.B. aus der DE 23 59 379 B2 bekannt. Hier bewegen sich auf der Trasse automatisch gesteuerte Fahrzeuge, die Personen befördern und an im voraus festgelegten, möglichen Haltepunkten anhalten, um Fahrgäste ein- und aussteigen zu lassen. Je nachdem, wieviele Fahrgäste befördert werden wollen und welche Zielwünsche von diesen Fahrgästen in an den Haltepunkten befindliche Eingabeeinrichtungen eingegeben werden, wird im Linienbetrieb oder im Anforderungsbetrieb gefahren. Im Falle des Anforderungsbetriebes werden die von den einzelnen Fahrzeugen zu fahrenden Routen durch einen Dispositionsrechner unter Berücksichtigung der Zielwünsche nach Kriterien wie Wartezeit oder Betriebskosten optimiert.

Ein solches Verkehrsnetz ist für den Transport von Frachtgut, auch dann, wenn die Transportziele einem die Verteilung steuernden Rechner bekannt sind, wenig geeignet. Es ist wegen der mit dem Personentransport verbundenen Erfordernisse, hohe Sicherheit und Schnelligkeit des Transportes, sowie der Notwendigkeit, zum Be- und Entladen anhalten zu müssen, unnötig aufwendig.

Es ist deshalb Aufgabe der Erfindung, ein Verkehrsnetz mit ringförmiger Trasse anzugeben, das einfacher ist und sich deshalb zur automatischen Güterbeförderung eignet.

Diese Aufgabe wird durch die im Patentanspruch 1 angegebenen Merkmale gelöst.

Durch die Verwendung einheitlicher Frachtgutbehälter und eines Vortriebsystems, das auf die Frachtgutbehälter einwirkt und ihnen eine gemeinsame, gleichbleibende Geschwindigkeit verleiht, wird eine Art Förderbandfunktion auf der Trasse geschaffen. Die Einrichtung spezieller Be- und Entladestellen mit außerhalb der Trasse liegenden Beschleunigungs- und Verzögerungsstrecken erlaubt ein Ein- und Ausgliedern einzelner Frachtgutbehälter in die sich mit der Vortriebsgeschwindigkeit bewegende Behälterschlange ohne diese selbst anhalten zu müssen.

Ein solches Verkehrsnetz ist energiesparend, leise und umweltfreundlich. Da es beim reinen Güterverkehr nicht so sehr auf eine kurze Transportzeit ankommt, wie z.B. beim Personenverkehr, spielt die Trassenführung nahezu keine Rolle.

Die Trasse kann z.B. um ein Ballungsgebiet herumgeführt oder entlang der Grenzen eines Landes durch zumeist strukturschwache Gebiete geführt werden, in denen einerseits eine mit den einzurichtenden Be- und Entladestellen verbundene Strukturförderung erwünscht ist, andererseits der Landerwerb für die benötigten Bauten kostengünstig möglich ist.

Ausgestaltungen des Verkehrsnetzes nach der Erfindung sind in den Unteransprüchen angegeben.

So sieht Anspruch 2 die Verwendung eines magnetischen Tragsystems und eines elektromagnetischen Vortriebsystems vor. Dies hat den Vorteil, daß für den Personenschnellverkehr fertig entwickelte Systeme (z.B. Transrapid-Technik) zum Einsatz kommen können, die bei relativ langsam fließendem Güterverkehr besonders leise und verschleißarm sind.

Anspruch 3 sieht die Verlegung der Trasse oberhalb von Autobahnen oder Eisenbahnen vor. Damit wird bei geringen Mehrkosten für die Trasse, der Landverbrauch gering gehalten. Bei Verlegung über Eisenbahnstrecken ist auch eine Kosten sparende, gemeinsame Energieversorgung für die neu zu bauende Trasse und die jeweilige, bereits bestehende Eisenbahnstrecke möglich.

Anspruch 4 ermöglicht die Trassenverlegung in unterirdischen Röhren und damit die Schonung ökologisch empfindlicher Gebiete oder die Unterquerung dicht bebauter Wohn- und Industriezonen.

Gemäß Anspruch 5 kann das Verkehrsnetz in mehrere Unternetze aufgeteilt sein. Damit werden alternative Transportwege geschaffen, die Abkürzungen darstellen und damit die Transportzeit herabsetzen. Es wird damit auch möglich, Güter, die schnell gebraucht werden, über eine kürzere Transportstrecke zu befördern und damit schneller anzuliefern. Umwegstrecken mit längeren Transportwegen können zur Entlastung der hauptsächlich benutzten Trassen dienen.

Anspruch 6 betrifft die Kennzeichnung und die Laufwegsteuerung und -verfolgung der Frachtgutbehälter. Das hierfür beanspruchte System ermöglicht ein zentrales Transportmanagement mit einem Steuerungsrechner, der sämtliche für den Transport an ein vorgebenes Ziel erforderlichen Steuerungsvorgänge automatisch veranlaßt und überwacht.

Gemäß Anspruch 7 kann ein solches Verkehrsnetz analog zu einem paketvermittelten Nachrichtennetz betrieben werden, in dem (den Frachtgutbehältern entsprechende) Teile einer Nachricht über verschiedene, gerade verfügbare Wege zum selben vorgebenen Ziel gelangen.

Patentanspruch 8 betrifft eine Ausgestaltung einer Frachtgutbehälter-Umsetzvorrichtung, wie sie in einem Verkehrsnetz nach der Erfindung an Be- und Entladestellen und an Trassenverzweigungen gebraucht wird.

Anhand von drei Figuren soll nun ein Ausführungsbeispiel für ein Verkehrsnetz nach der Erfindung näher beschrieben werden.
- Fig. 1: zeigt den Plan eines möglichen ringförmigen Verkehrsnetzes für die Bundesrepublik Deutschland,
- Fig. 2: zeigt eine über einer Eisenbahnstrecke aufgeständerte Magnetschwebetrasse,
- Fig. 3: zeigt eine Be- und Entladestelle.

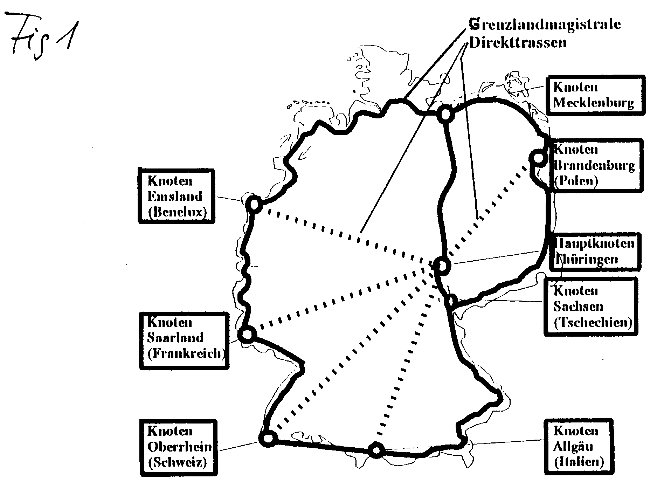

In Fig. 1 verläuft eine ringförmige Haupttrasse, Grenzlandmagistrale genannt, in Grenznähe um den größten Teil des Territoriums der Bundesrepublik Deutschland herum. Eine Querverbindung, ebenfalls als Grenzlandmagistrale bezeichnet, verläuft entlang der ehemaligen Demarkationslinie zur früheren DDR, vorzugsweise im unbebauten, sogenannten Todesstreifen. Verschiedene Direkttrassen verbinden Punkte der ringförmigen Haupttrasse auf direktem Weg. Als Knoten bezeichnete Abzweigstellen befinden sich an Orten, an denen die Grenzlandmagistralen mit sich selbst oder mit Direkttrassen zusammentreffen. Nicht dargestellte Be- und Entladestellen können sich überall dort an der Haupttrasse befinden, wo Bedarf dafür besteht, in der Nähe größerer Städte, in Industriezonen, in der Nähe von Häfen oder Verschiebebahnhöfen. Alle Trassen werden vorzugsweise in beiden Richtungen benutzt und besitzen deshalb mindestens zwei Richtungsspuren.

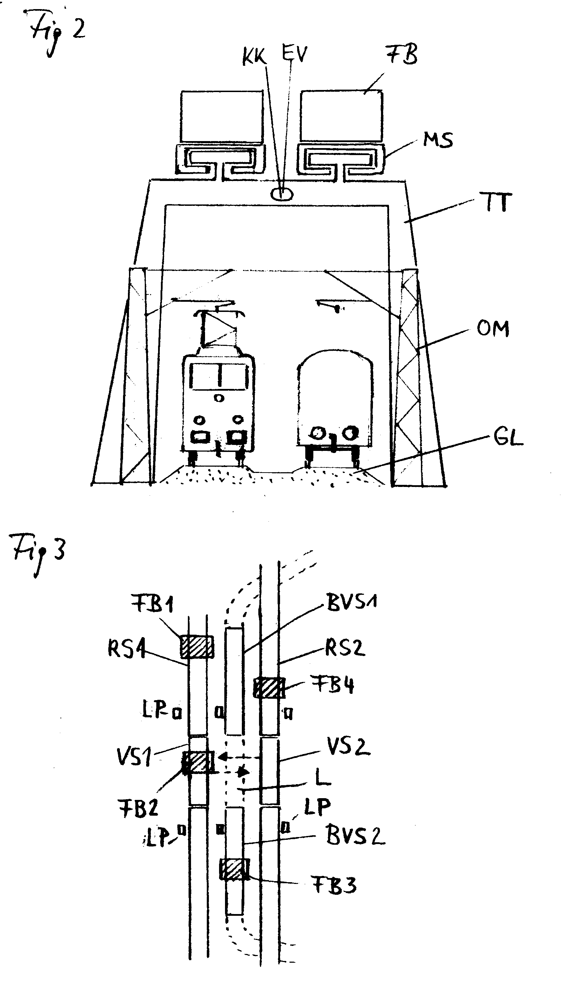

In Fig. 2 ist eine Trasse, über einer Bahnlinie aufgeständert, skizziert. Im Wechsel mit Oberleitungsmasten OM sind über dem Gleisbett GL der herkömmlichen Bahnstrecke vorgefertigte Tragtore TT aus Beton oder Stahl errichtet, welche die statischen Teile eines Magnetschwebesystems MS und eines linearen elektromagnetischen Vortriebsystem tragen. Die beweglichen Teile des magnetischen Trägersystems und des Vortriebsystems sind an Lafetten angebracht, die die Frachtgutbehälter FB tragen. Über die Tragtore hinweg sind ein Energieversorgungskanal EV und ein Kommunikationskanal KK verlegt. Letzterer ist vorzugsweise als Lichtwellenleiter ausgebildet.

Fig. 3 zeigt eine an der Trasse eingerichtete Be- und Entladestelle. Die Richtungsspuren RS1 und RS2 der Trasse sind hier so weit voneinander entfernt, daß eine weitere Spur in der Mitte zwischen beiden Richtungsspuren verlegt werden konnte. Diese weitere Spur weist beiderseits einer Lücke L Beschleunigungs- und Verzögerungssegmente BVS1, BVS2 auf. Im weiteren Verlauf ist die weitere Spur kreuzungsfrei aus der Trasse hinausgeführt. Die beiden Richtungsspuren der Trasse enthalten auf Höhe der Lücke L verschiebbare Segmente VS1, VS2, die mechanisch samt einem auf ihnen befindlichen Frachtgutbehälter FB2 in die Lücke der weiteren Spur geschoben werden können, so daß dieser Frachtgutbehälter mit gleichbleibender Geschwindigkeit auf das in der Bewegungsrichtung liegende Beschleunigungs- und Verzögerungssegment geschoben wird. Nach Freiwerden kehrt das verschiebbare Segment VS1 an seinen Platz in der Richtungsspur RS1 zurück und zwar so rechtzeitig, daß der nächste sich nähernde Frachtgutbehälter FB1 keine Lücke mehr in seiner Richtungsspur RS1 vorfindet. Der aus der Richtungsspur ausrangierte Frachtgutbehälter wird im Bereich des Beschleunigungs- und Verzögerungssegmentes abgebremst und mit einer gewünschten Geschwindigkeit z.B. zu einer Verladerampe gefahren.

Beim Einphasen eines Frachtgutbehälters erfolgt der beschriebene Vorgang in umgekehrter Richtung. Ein auf ein Beschleunigungs- und Verzögerungssegment gebrachter Frachtgutbehälter wird durch dessen unabhängig vom Vortriebsystem der Trasse steuerbares Vortriebsystem auf die auf der Trasse gefahrene Geschwindigkeit beschleunigt. Seine Bewegung und die Bewegung des verschiebbaren Segmentes derjenigen Richtungsspur, auf die der Frachtgutbehälter gebracht werden soll, sind so aufeinander abgestimmt, daß der Frachtgutbehälter, sobald er an die Lücke L gelangt, dort dieses verschiebbare Segment vorfindet. Sobald sich der Frachtgutbehälter vollständig auf dem verschiebbaren Segment befindet, wird dieses in seine Richtungsspur zurück verschoben und der Frachtgutbehälter somit in den fließenden Verkehr der Trasse eingeordnet. Die Zuordnung von Zeitschlitzen, in denen eine Einordnung von Frachtgutbehältern stattfinden kann, sowie auch das Auslösen der einzelnen, beim Einordnen erforderlichen Steuerungsvorgänge wird von einem in der Figur nicht dargestellten Rechner vorgenommen, der durch ständige Abfrage von an der Trasse angeordneten Ausleseeinrichtungen LP die Orte sich nähernder Frachtgutbehälter und damit auch passende Lücken erkennt.

## Patentansprüche

1. Verkehrsnetz mit ringförmiger Trasse und auf dieser bewegten Objekten,
**dadurch gekennzeichnet,** daß die Objekte Frachtgutbehälter (FB) vorgegebener Größe sind, daß die Trasse mit einem automatisch gesteuerten Vortriebsystem ausgestattet ist, das die Bewegung der einzelnen Frachtgutbehälter mit gleichbleibender Geschwindigkeit gestattet und daß mehrere Be- und Entladestellen vorgesehen sind, an denen auf die gleichbleibende Geschwindigkeit vorbeschleunigte Frachtgutbehälter auf die Trasse gebracht und auf der Trasse befindliche Frachtgutbehälter ohne vorheriges Abbremsen von der Trasse genommen werden können.

2. Verkehrsnetz nach Anspruch 1, dadurch gekennzeichnet , daß die Frachtgutbehälter mit einem auf die Trasse abgestimmten magnetischen Tragsystem (MS) ausgestattet sind, das magnetisches Schweben erlaubt und daß das Vortriebsystem ein in die Trasse integriertes elektromagnetisches Linearmotorsystem ist.

3. Verkehrsnetz nach Anspruch 1 oder 2, dadurch gekennzeichnet, daß die Trasse vorzugsweise aufgeständert über bestehenden Eisenbahnstrecken oder Autobahnen verläuft.

4. Verkehrnetz nach Anspruch 1 oder 2, dadurch gekennzeichnet, daß die Trasse zumindest teilweise in über- oder unterirdischen Röhren verläuft.

5. Verkehrsnetz nach einem der vorstehenden Ansprüche, dadurch gekennzeichnet, daß innerhalb des von der ringförmigen Trasse umschlossenen Gebietes zusätzlich Direkttrassen vorgesehen sind, die verschiedene Punkte der ringförmigen Trasse miteinander verbinden und auf diese Weise Unterringe entstehen lassen.

6. Verkehrsnetz nach einem der vorstehenden Ansprüche, dadurch gekennzeichnet, daß die Frachtgutbehälter vorzugsweise passive Transponder tragen, in denen in codierter Form Informationen über den jeweiligen Frachtgutbehälter und seinen Inhalt sowie eine Zieladresse gespeichert sind, daß entlang der Trasse Abfrageeinrichtungen (LP) installiert sind, welche die Transponder auslesen und die jeweils gelesene Information an einen örtlichen und/oder einen zentralen Steuerungsrechner weiterleiten und daß der Steuerungsrechner die zum Erreichen des Zieles entlang der Trasse erforderlichen Steuerungsvorgange veranlaßt.

7. Verkehrsnetz nach Anspruch 6, dadurch gekennzeichnet, daß der zentrale Steuerungsrechner oder ein örtlichen Steuerungsrechnern übergeordneter Wegerechner die von den einzelnen Frachtgutbehältern bis zu ihrem Zielort zurückzulegenden Transportstrecken fortlaufend ermittelt und im Falle mehrerer, alternativ zur Verfügung stehender Strecken diejenige Strecke vorgibt, die hinsichtlich der zulässigen benötigten Transportzeit, hinsichtlich der Auslastung des Netzes und hinsichtlich des Energiebedarfes insgesamt optimal ist.

8. Verkehrsnetz nach einem der vorstehenden Ansprüche, dadurch gekennzeichnet, daß die Be- und Entladestellen sowie, bei Vorhandensein von Direkttrassen, notwendige Trassenverzweigungen quer zur Bewegungsrichtung der Frachtgutbehälter verschiebbare Trassensegmente (VS1, VS2) aufweisen, die samt einem darauf befindlichen Frachtgutbehälter (FB2) für eine kurze Zeit in eine parallellaufende Abzweigtrasse oder eine, Beschleunigungen oder Verzögerungen einzelner Frachtgutbehälter zulassende Be- oder Entladespur einfügbar sind.
